# FASCICULE DE BREVET EUROPEEN

(11) **EP 2 809 501 B1**
(45) Date de publication et mention de la délivrance du brevet: **25.08.2021**
(21) Numéro de dépôt: 13702962.5
(22) Date de dépôt: 28.01.2013
(51) Int. Cl.: B29C 70/30, B29C 70/54, D04H 3/08, D04H 3/11, D04H 3/105

(54) **PROCEDE DE DRAPAGE SUR FORME DE MATERIAUX COMPOSITES**
VERFAHREN ZUM DRAPIEREN VON VERBUNDMATERIALIEN AUF EINER FORM
METHOD FOR DRAPING COMPOSITE MATERIALS ON A FORM

(30) Priorité: 30.01.2012 FR 1250861
(43) Date de publication de la demande: 10.12.2014
(73) Titulaire: ArianeGroup SAS, 75015 Paris (FR)
(72) Inventeur: DEYTS, Jean-Baptiste, F-33200 Bordeaux (FR); CHOTARD, Florian, F-44300 Nantes (FR); SOCCARD, Eric, F-44130 Blain (FR)
(74) Mandataire: Brevalex
(86) Numéro de dépôt international: PCT/EP2013/051565
(87) Numéro de publication internationale: WO 2013/113653

(56) Documents cités:
- EP-A1- 1 923 192
- US-A1- 2004 192 137
- US-A1- 2008 220 161
- None

## Description

La présente invention concerne un procédé de drapage sur forme de matériaux composites.

Elle s'applique à la mise en œuvre de matériaux composites thermoplastiques par drapage pour la réalisation de pièces structurales de grandes dimensions et de forme complexe.

Dans le cadre du drapage sur forme de matériaux composites, il est nécessaire de permettre l'accroche d'une première couche de matériau composite sur l'outillage pour permettre le drapage de la pièce.

Les solutions permettant le drapage doivent en outre être compatible avec un drapage automatisé utilisant un chauffage laser du composite.

Les matériaux thermoplastiques ne possèdent pas un aspect pégueux à température ambiante. Cet état empêche leur accroche sur un outillage lors de leur mise en œuvre. Si des moyens simples, ruban adhésif par exemple, existent pour des formes planes et de petites dimensions, le problème n'a pas été résolu pour permettre l'accroche de nappes déposées sur des formes complexes. Si le premier pli ne peut être accroché sur l'outillage, cela empêchera la réalisation de la pièce.

Afin de résoudre cette problématique, il convient de développer une solution technique qui permettra l'accroche d'un premier pli sur un outillage complexe lors de sa dépose. Cette solution doit permettre également le démoulage de la pièce à l'issue du drapage ou de la consolidation. Enfin cette solution doit permettre de conserver la précision de drapage de la machine, en effet une déformation excessive du premier pli pourrait perturber la dépose et entraîner des jeux et/ou des recouvrements des nappes déposées ce qui altérerait la santé du matériau final ainsi que ses performances mécaniques.

Les problèmes que doivent résoudre les solutions au problème du drapage de grandes pièces, en particulier de forme complexes ou non développable, à partir d'un outillage représentant une forme de la pièce sont les suivantes :
Déformation /conformation sur outillage,
Compatibilité avec la matrice du composite;
Accroche du composite sur la solution;
Stabilité lors du drapage;
Aptitude au démoulage après la consolidation.
Parmi les solutions identifiées dans le passé, on retrouve:
   - La réalisation d'une boucle appelée hoop en Anglais,
   - La mise en aspiration sous vide,
   - L'utilisation d'un film polymère et notamment d'un film en PEEK.

Un hoop consiste à faire du bobinage autour de l'outillage sur lequel on souhaite draper. Le fait d'avoir une continuité de fibres autour de l'outillage associé à un bridage mécanique périphérique (ruban adhésif par exemple) permet de maintenir le matériau sur la zone de drapage. Cette première couche permet la dépose de l'ensemble de la pièce, mais génère de nombreuses pertes en face arrière de l'outillage puisque la matière du bobinage sur cette face y sera inutilisée. Cette solution reste néanmoins une solution de référence pour les pièces de révolution telles que des cylindres.

La technique de la mise en aspiration sous vide consiste à maintenir la matière sur la zone de drapage au moyen d'un vide créé par aspiration. Pour cela le drapage est effectué sur une surface percée reliée à un circuit d'aspiration. Lorsque le drapage débute, le circuit d'aspiration est actionné et la matière est maintenue sur la zone utile. Cependant, la matière, par exemple des fibres de carbone, pénètre dans les orifices d'aspiration ce qui la déforme et entraine une dégradation des propriétés du matériau final. Cette solution présente par ailleurs un surcoût pour le procédé car elle nécessite la réalisation d'un outillage complexe avec circuit de vide intégré.

Enfin, l'utilisation de films polymères s'adapte mal aux drapages de formes complexes car ces dernières entraineront des plissures du film qui généreront des écarts de précision lors du drapage et des sur épaisseurs locales dans le matériau. L'utilisation d'un film nécessite à un montage complexe pour assurer son maintien en position.

Il est aussi possible d'utiliser un outillage multiperforé avec circuit de vide intégré qui est coûteux ou encore d'utiliser le film polymère en tant que bâche à vide ce qui nécessite l'utilisation et la mise en place de tissus de drainage et de mastic d'étanchéité.

Cette dernière option cumule l'inconvénient de nécessiter plusieurs heures de travail manuel, ce qui pénalise le rendement de fonctionnement d'une machine de drapage automatisée, en ajoutant une sensibilité accrue en cas de problème lors de la réalisation du premier pli. Cette sensibilité s'illustre lorsqu'il est nécessaire de retirer les mèches déposées qui sont soudées à la surface du film, ce dernier se déchirant ou devant être découpé pour réaliser cette opération. Le système perd alors son étanchéité et ne peut plus respecter les contraintes de stabilité dimensionnelles ni celles de maintien du composite à la surface de l'outillage. Il est ainsi nécessaire de procéder au remplacement du film ou à une réparation pour pouvoir réaliser le drapage avec pour conséquence de nouvelles opérations manuelles ce qui sera d'autant plus couteux en temps et en matériaux lorsque cela arrivera sur une pièce de grandes dimensions.

Le document US2004/0192137 A1 divulgue un matériau comprenant une couche conductrice de résine.

Au vu de cet art antérieur, la présente invention propose une solution nouvelle permettant l'accroche d'un premier pli en composite carbone/thermoplastique pour la réalisation de pièces à géométrie complexe au moyen d'une machine de drapage automatisée.

L'invention a donc pour objectif de définir un procédé et des produits permettant de fabriquer des pièce en matériaux composite thermoplastique :
- permettant l'accroche du premier pli,
- sans provoquer de plissement y compris lors de la mise en place sur forme complexe en particulier non réglée,
- avec un temps de mise en place bref,
- ne déformant pas la préforme et en assurant son intégrité géométrique,
- en formant une barrière thermique entre l'outillage métallique (le moule, froid) et la pièce en fusion ce qui optimise d'autant plus le phénomène d'accroche.

Les exigences suivantes ont été également considérées :
- nécessité d'un solution déformable pour autoriser la réalisation des pièces à géométrie complexe,
- nécessité d'employer un matériau compatible avec le cycle de fabrication de la pièce composite et compatible avec la température de mise en œuvre du matériau thermoplastique, c'est à dire fondant à la même température, et donc dans le cas où le thermoplastique est du PEEK, de l'ordre de 400°C.
- impact le plus réduit possible sur la masse totale de la pièce,
- diminution et simplification des opérations manuelles.

Dans ce cadre, la présente invention propose un procédé de drapage sur forme qui comprend une étape de dépose sur la forme d'un support de premier pli sous forme d'une ou plusieurs étoffes non tissées polymères, selon la revendication 1.

Le procédé comprend avantageusement une étape d'aiguilletage de la ou des étoffes non tissées préalable à la dépose.

L'étape d'aiguilletage est préférablement un aiguilletage de 50 à 130 Cps/minute et préférablement de l'ordre de 110 Cps/minute.

Avantageusement, le procédé comprend de manière complémentaire ou alternative une étape d'hydroliage de la ou des étoffes non tissées préalable à la dépose.

L'étape préalable d'hydroliage est réalisée avantageusement à une pression de l'ordre de 40 à 80 bar et préférablement de l'ordre de 60 bar.

Avantageusement, le procédé comprend de manière complémentaire ou alternative une étape de calandrage de la ou des étoffes non tissées préalable à la dépose.

Selon un mode de réalisation avantageux, le procédé comprend des étapes d'aiguilletage, hydroliage et calandrage préalables à la dépose, l'ordre des étapes étant aiguilletage puis hydroliage puis calandrage.

La ou les étoffes non tissées comprennent des fibres polymères d'une première nature.

Par nature on entend un matériau compatible de la matrice du matériau composite à draper.

Compatible, cela veut dire en particulier, mais pas seulement miscible, c'est à dire que son mélange avec la matrice du matériau composite est monophasé entre la température ambiante et leurs températures de fusion.

Le matériau du non tissé peut notamment être le même que celui de la matrice du composite.

Selon un mode de réalisation alternatif, la ou les étoffes non tissées comprend des fibres polymères de deux natures différentes.

Dans ce cas, l'un des matériaux est un matériau compatible avec la matrice du composite, l'autre pouvant avoir une température de fusion supérieure et servir notamment d'armature de renfort.

Le procédé comprend une étape de bridage de la ou des étoffes non tissées sur la forme.

L'étape de bridage comprend préférablement un bridage sélectionné à partir d'un bridage mécanique à l'aide de cales vissées ou clampées, un bridage électromagnétique à l'aide d'aimant, un bridage au moyen de rubans adhésifs ou un bridage par bandes d'accrochage.

Le procédé comprend une étape de fusion du matériau de la ou des étoffes non tissées et/ou une étape d'apport de résine par fusion partielle de fibres polymères de la ou les étoffes non tissées.

La description concerne en outre un matériau de réalisation d'un premier pli de drapage sur forme, ledit matériau étant un non tissé thermoplastique fabriqué avec une étoffe non tissée de fibres polymères.

Selon un mode de réalisation avantageux les fibres polymères comprennent du PEEK.

Selon un mode de réalisation alternatif ou complémentaire, les fibres polymères comprennent du PEI.

Selon une seconde alternative, les fibres polymères comprennent du polyamide.

Le matériau comprend avantageusement de 60à 70% de fibres PEEK.

Selon un mode de réalisation particulier, les fibres polymères sont constituées de 100% de fibres PEEK.

Selon un mode de réalisation particulier, le matériau est préférablement constitué d'un non tissé aiguilleté.

Selon un mode de réalisation alternatif ou complémentaire, le matériau est constitué d'un non tissé hydrolié.

Selon un autre mode de réalisation alternatif ou complémentaire, le matériau est constitué d'un non tissé calandré.

La description concerne en outre un matériau non tissé thermoplastique qui est fabriqué avec une mise en œuvre successive d'aiguilletage, d'hydroliage et de calandrage d'une étoffe non tissée de fibres polymères.

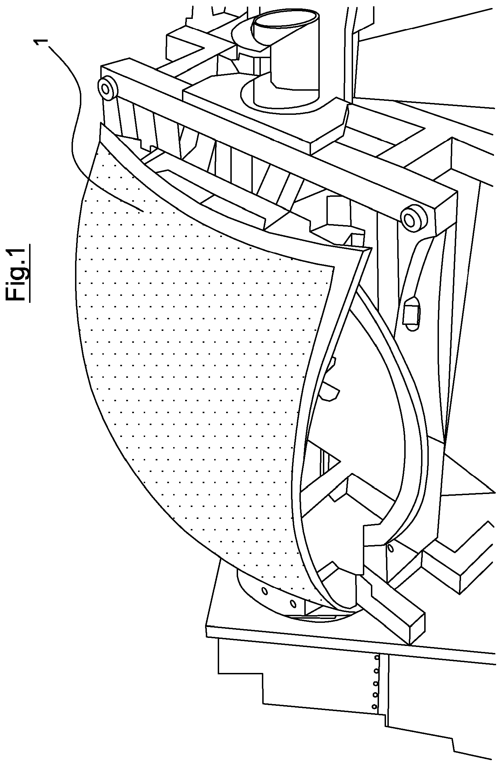

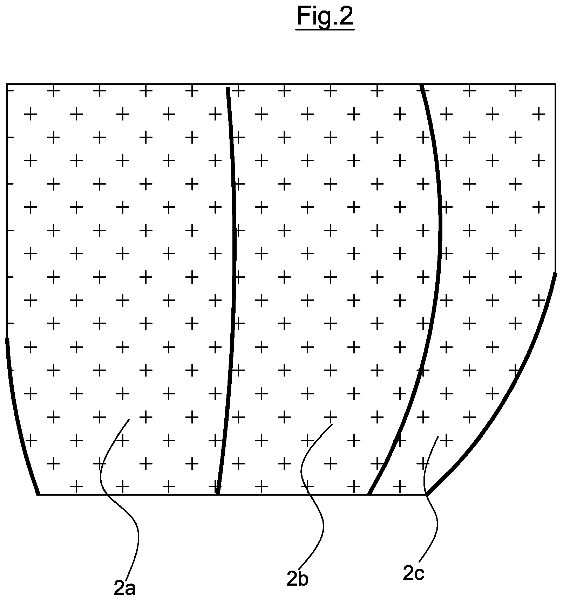

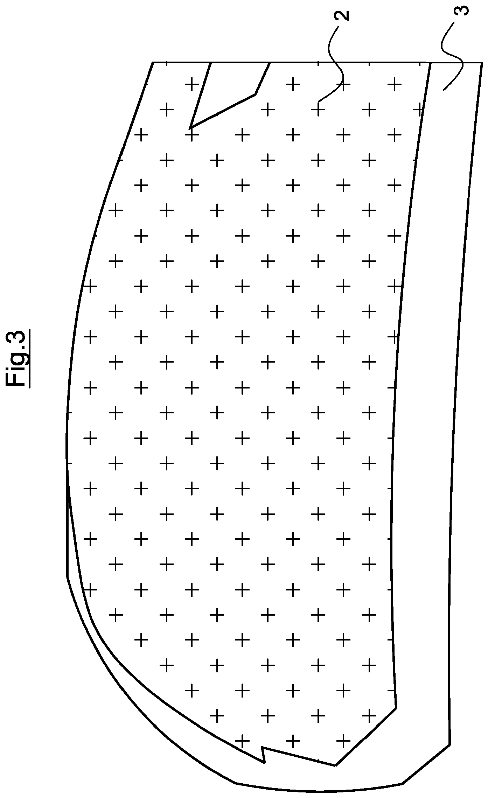

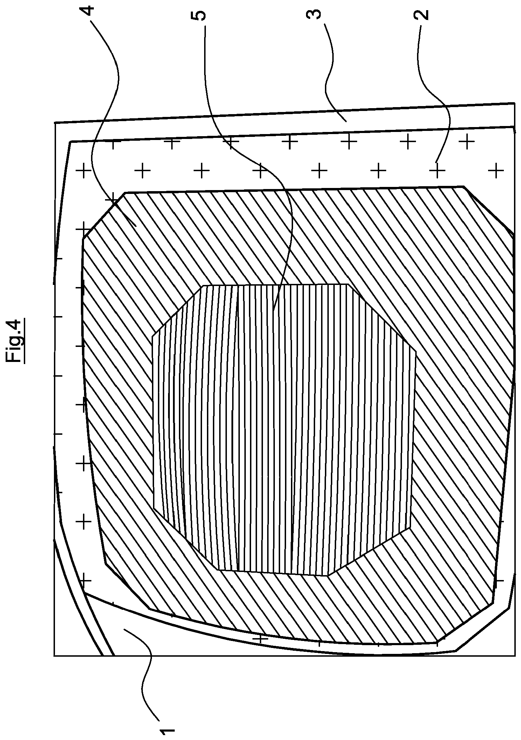

D'autres caractéristiques et avantages de l'invention seront apparents à la lecture de la description qui suit d'exemples de réalisation de l'invention en référence aux dessins qui représentent:
en figure 1: un exemple d'outillage ou forme de réalisation d'une pièce composite non développable;
en figure 2: une vue d'une dépose de trois bandes formant un premier pli selon l'invention sur la forme de la figure 1 ;
en figure 3: une vue d'un exemple de bridage d'un premier pli selon l'invention sur la forme de la figure 1 ;
en figure 4: une vue d'un drapage réalisé sur le premier pli de la figure 3.

La présente invention propose l'utilisation d'un non tissé à base de fibres polymères comme couche de base pour le drapage d'une pièce sur une forme 1 dont un exemple est donné en figure 1.

La solution principalement envisagée dans la présente invention est l'utilisation d'un premier pli sous forme d'étoffe ou d'étoffes polymères non tissées. Ces dernières répondent à la double contrainte de déformabilité et de compatibilité avec la matrice du composite.

A l'inverse d'un tissu où l'arrangement des fibres est défini par une armure, un non-tissé présente un arrangement aléatoire des fibres. Ceci lui permet des présenter un comportement plus homogène dans le plan par rapport à un tissu qui possèdent deux directions privilégiées (fils de chaîne et de trame). En fonction de sa construction, un non-tissé est plus déformable qu'un tissu, il se conforme ainsi sur des formes complexes sans générer de plis à l'inverse des tissus. Cette propriété permet de supprimer les risques d'imprécisions de dépose ou de déviation des nappes dans les zones singulières.

Les étapes de fabrication d'un non tissé comprennent les étapes suivantes:
- Ouvraison des fibres ou mélange des fibres,
- Cardage;
- Nappage;
- Aiguilletage, hydroliage et/ou calandrage, le calandrage se faisant à chaud à une température permettant de faire fondre le non tissé;
- Conditionnement.

Les essais de drapage ont été menés sur un outillage ou forme ¼ de sphère 1 comme représenté en figure 1. Deux références de matériaux ont été testées durant cette session :

| ID | PEEK | Aiguilletage | Hvdroliaqe | Calandrage | accroche | déformation |
|---|---|---|---|---|---|---|
| 1 | 100% | 55 cps/min | non | non | très bonne | mauvaise |
| 2 | 100% | 55 cps/min | 40 bar | non | très bonne | bonne |

Le Non-tissé N°1 mesure 1,10 m de large, il est donc possible de recouvrir l'intégralité de l'outillage quart de sphère avec ce matériau. Le bridage est assuré en périphérie de l'outillage à l'aide de ruban adhésif polyimide.

Si l'accrochage est bon, la déformation intrinsèque du non-tissé ID1 associé au bridage périphérique apparait importante, et n'est pas optimale quand il y a des exigences fortes de précision de dépose des mèches. Cette référence de non-tissé doit alors être améliorée.

Le non tissé a été modifié par hydroliage, méthode de liage mécanique de fibres individuelles qui utilise des jets d'eau haute pression; cela a mené au non tissé ID2 en augmentant sa résistance mécanique et en diminuant sa déformabilité.

La machine d'hydroliage employée pour les essais mesure 500 mm de large ce qui limite la largeur de bande de non-tissé à 400mm.

Pour les essais, comme représenté en figure 2, trois bandes 2a, 2b, 2c de ce nouveau non-tissé sont positionnées côte-à-côte sur l'outillage pour permettre le drapage.

Différentes configurations de bridage ont alors été testées et celle offrant les meilleures garanties repose sur un ruban adhésif double face positionné en périphérie de la pièce mais sous la zone de drapage dans la zone de sur-longueur de la pièce. Pour ce bridage, plusieurs carrés de ruban adhésif double face sont positionnés entre les bandes pour éviter un glissement des unes par rapport aux autres.

La figure 3 donne un exemple de préhension du non tissé 2 par ancrage périphérique 3 avec un ruban adhésif par exemple un ruban adhésif thermalimide.

La mise en place s'opère en tendant le non-tissé sur la forme. La déformabilité du non tissé sur une forme non-développable est suffisante et sa mise en place se fait sans créer de pli. Dans le cas d'une surface plus complexe, plus grande ou associée à une courbure plus prononcée, des découpes et assemblage par soudure sont prévues.

A l'issue du drapage sur la configuration de la figure 2, comme représenté en figure 4, aucun jeu supérieur à 1 mm n'est visible entre nappes 4 et aucun défaut n'est visible lors du drapage de 6 plis supplémentaires 5. Cette référence de non-tissé associée à ce mode de bridage constitue donc une solution d'accroche d'un premier pli satisfaisante.

Une deuxième campagne d'essais a été conduite, pour mieux préciser les conditions de fabrication d'un non tissé satisfaisant, en évaluant en particulier la déformabilité des produits et la fonction d'accrochage.

Pour atteindre cet objectifs trois aspects ont été plus particulièrement étudiés, le premier consistant à augmenter l'ancrage mécanique en doublant la fréquence d'aiguilletage, le deuxième portant sur les conditions d'hydroliage et le troisième consistant à calandrer le non tissé pour faire fondre les fibres en surface.

Pour réduire la température de calandrage au dessous de la température de fusion du PEEK (T°f=340°c) nous avons mélangé des fibres de PEI et de PEEK. Ce nouveau non tissé a ensuite été calandré à 300°C pour faire fondre les fibres de PEI.

Un non-tissé a également été fabriqué avec des fibres de PEEK noir pour mettre en valeur une éventuelle amélioration du comportement lors de la dépose laser.

Les différentes références réalisées sont présentés dans le tableau ci-dessous :

| ID | PEEK | PEI | Aiguilletage | Hydroliaae | Calandrage |
|---|---|---|---|---|---|
| 2 | 100% | 0 | 55 cps/min | 40 bar | non |
| 3 | 66% | 34% | 110 cps/min | 60 bar | oui |
| 4 | 66% | 34% | 55 cps/min | 60 bar | non |
| 5 | 0 | 100% | 55 cps/min | 40 bar | oui |
| 6 | 85% noir | 15% | | | Non |

Les essais de drapage ont été réalisés sur un outillage plan. Trois nappes composées chacune de 8 mèches de composites structuraux à fibres de carbone et à matrice polymère connus par exemple sous la référence AS4/PEKK FC de 1/4 de pouce ont été drapées cote à cote sur les différents non-tissés.

Les dimensions des plis drapés sont donc de 305mm de large sur 1100 mm de long. Les dimensions des non-tissé étaient de 500mm x 1200mm.

Le bridage des non tissés assuré par du ruban adhésif en périphérie. Les différentes configurations testées et les résultats obtenus sont présentés dans le tableau ci-dessous.

| ID | Accroche | Déformation |
|---|---|---|
| 2 | très bonne | bonne |
| 3 | très bonne | très bonne |
| 4 | très bonne | bonne |
| 5 | très bonne | mauvaise |
| 6 | très mauvaise | / |

Ces résultats montrent :
- qu'un non tissé PEEK ou un non tissé PEEK/PEI comprenant de 60 à 70% de PEEK constitue un matériau adéquat pour l'application;
- qu'un aiguilletage et notamment un aiguilletage de 50 à 130 Cps/minute et préférablement de 110 Cps/minute avec une tolérance de 5 à 10% donne une plus grande résistance au non-tissé,
- qu'un hydroliage de l'ordre de 40 à 80 bar et plus précisément de 60 bar avec une tolérance de 5 à 10% est avantageux.

Les essais de drapage ont mis au jour l'importance du bridage des non-tissés. En effet en fonction du positionnement du bridage, la précision du drapage varie.

Il a donc été nécessaire de mettre au point des solutions de bridage efficaces. Plusieurs types de bridages sont utilisables:
- Bridage mécanique à l'aide de cales vissées ou clampées,
- Bridage électromagnétique à l'aide d'aimant;
- Bridage par bandes d'accrochage par exemple connues sous la marque Velcro.

Lors du drapage, il convient de prendre en compte les évolutions de la tête de dépose sur et autour de la zone de drapage, c'est pourquoi les systèmes de bridage par cales, qui créent des sur épaisseurs, sont positionnés en périphérie de l'outillage.

Cette disposition limite leur efficacité.

Une solution alternative repose sur l'emploi de bandes d'accrochage polymères (en l'occurrence PEEK) positionnées au plus près de la pièce sans en perturber le drapage.

L'usage de telles bandes d'accrochage permet de répartir les zones d'accrochage du non tissé sur la forme, certaines bandes d'accrochage étant disposées sous des parties destinées à recevoir le drapage ce qui permet notamment de réaliser des pièces avec des formes concaves ou convexes.

Les essais réalisés montrent que les non-tissés représentent donc une solution adaptée pour l'accroche du premier pli des composites thermoplastiques drapés.

Différents non-tissés ont été fabriqués et testées et plusieurs se sont révélés applicables pour cette application. Les principaux avantages des non-tissés polymères sont:
- une adaptation à toutes les géométries d'outillage,
- une masse additionnelle limitée sur la pièce finale;
- une compatibilité totale avec la matrice de fabrication;
- de constituer une solution d'enrichissement de la surface en polymère pour les opérations de soudage ultérieure;
- la simplicité de mise en œuvre (pas de bâche à vide à fabriquer...).

L'efficacité de la solution de l'invention reste néanmoins liée à l'efficacité de son bridage sur l'outillage.

Pour la présente application, les fibres du non tissé sont avantageusement de même matière que le matériau thermoplastique à mettre en œuvre, notamment le PEEK ou utilisent un matériau à point de fusion plus bas pour faciliter l'accroche du premier pli sur le non tissé.

L'utilisation de fibres PEEK ou d'un mélange de fibres PEEK/PEI rend la solution compatible du drapage et de la consolidation de la pièce. Par ailleurs le PEEK va fondre en surface lors du drapage de la même manière que la matrice du pré-imprégné déposé et favoriser l'adhérence de la nappe sur l'outillage. Il va enfin parfaitement se mêler à la résine du composite lors de la consolidation de la pièce en composite et proposer ainsi une surface riche en résine qui pourra être utile pour d'éventuelles opérations ultérieures de soudage.

Le matériau pré-imprégné doit être par nature « compatible » de la matrice du matériau composite.

Comme vu précédemment, compatible, cela veut dire en particulier, mais pas seulement miscible, c'est à dire que le mélange du matériau pré-imprégné avec la matrice du matériau composite est monophasé entre la température ambiante et leurs températures de fusion.

Selon une première solution, le matériau du non tissé est avantageusement le même que celui de la matrice.

Dans la description, on utilise du PEEK pour une matrice PEEK, on peut aussi utiliser les mélanges PEEK/PEI, le PEI permettant de diminuer la température de fusion et de faciliter le calandrage.

Ces matériaux conviennent aussi pour une matrice PEKK.

Pour une matrice polyamide de type PA12, on utilisera un non tissé en polyamide.

Les non tissés utilisés permettent l'accroche du premier pli sans provoquer de plissement y compris lors de la mise en place sur forme complexe en particulier non réglée, leur temps de mise en place est bref, ils ne déforment pas la préforme et assurent son intégrité géométrique et ils forment une barrière thermique entre l'outillage métallique du moule et la pièce en fusion ce qui optimise d'autant plus le phénomène d'accroche.

Le matériau de type non tissé thermoplastique fabriqué par mise en œuvre successive d'aiguilletage, d'hydroliage et de calandrage fait partie de la présente invention.

## Revendications

1. Procédé de drapage sur forme (1) d'un matériau composite thermoplastique, le procédé comprenant une étape de dépose sur la forme d'un support de premier pli sous forme d'une ou plusieurs étoffes non tissées (2, 2a, 2b, 2c) à fibres polymères d'un matériau compatible de la matrice du matériau composite à draper, une étape de mise en place de la ou des étoffes non tissées en tendant la ou les étoffes non tissées sur la forme et une étape de bridage de la ou des étoffes non tissées tendues sur la forme, une ou plusieurs étapes de drapage de plis (4, 5) de matériau composite thermoplastique et, dans une étape d'accroche du premier pli, une étape de fusion du matériau de la ou des étoffes non tissées et/ou une étape d'apport de résine par fusion partielle de fibres polymères de la ou les étoffes non tissées.

2. Procédé dé drapage selon la revendication 1, **caractérisé en ce qu'**il comprend une étape d'aiguilletage de la ou des étoffes non tissées préalable à la dépose.

3. Procédé de drapage selon la revendication 2, **caractérisé en ce que** l'étape d'aiguilletage est un aiguilletage de 50 à 130 Cps/minute.

4. Procédé de drapage selon la revendication 1, 2 ou 3, **caractérisé en ce qu'**il comprend une étape d'hydroliage de la ou des étoffes non tissées préalable à la dépose.

5. Procédé de drapage selon la revendication 4, **caractérisé en ce que** l'étape préalable d'hydroliage est réalisée à une pression de l'ordre de 40 à 80 bar.

6. Procédé de drapage selon l'une quelconque des revendications précédentes, **caractérisé en ce qu'**il comprend une étape de calandrage de la ou des étoffes non tissées préalable à la dépose.

7. Procédé de drapage selon la revendication 1, **caractérisé en ce qu'**il comprend des étapes d'aiguilletage, hydroliage et calandrage préalables à la dépose, l'ordre des étapes étant aiguilletage puis hydroliage puis calandrage.

8. Procédé de drapage selon l'une quelconque des revendications précédentes **caractérisé en ce que** la ou les étoffes non tissées comprend des fibres polymères de deux natures différentes.

9. Procédé de drapage selon l'une quelconque des revendications précédentes **caractérisé en ce que** l'étape de bridage comprend un bridage sélectionné à partir d'un bridage mécanique à l'aide de cales vissées ou clampées, un bridage électromagnétique à l'aide d'aimant, un bridage au moyen de rubans adhésifs ou un bridage par bandes d'accrochage.

## Patentansprüche

1. Verfahren zum Drapieren eines thermoplastischen Verbundmaterials auf eine Form (1), wobei das Verfahren einen Schritt des Aufbringens eines ersten Lagenträgers in Form eines oder mehrerer Vliesstoffe (2, 2a, 2b, 2c) aus Polymerfasern aus einem kompatiblen Material der Matrix des zu drapierenden Verbundmaterials auf die Form umfasst, einen Schritt des Platzierens des Vliesstoffs oder der Vliesstoffe durch Spannen des Vliesstoffs oder der Vliesstoffe über die Form und einen Schritt des Spannens des oder der auf die Form gespannten Vliesstoffe, einen oder mehrere Schritte des Drapierens von Lagen (4, 5) des thermoplastischen Verbundmaterials, und in einem Schritt des Anbringens der ersten Lage einen Schritt des Schmelzens des Materials des Vliesstoffs oder der Vliesstoffe und/oder einen Schritt des Zuführens von Harz durch teilweises Schmelzen von Polymerfasern des Vliesstoffs oder der Vliesstoffe.

2. Drapierverfahren nach Anspruch 1, **dadurch gekennzeichnet, dass** es vor dem Aufbringen einen Schritt des Vernadelns des Vliesstoffs oder der Vliesstoffe umfasst.

3. Drapierverfahren nach Anspruch 2, **dadurch gekennzeichnet, dass** der Vernadelungsschritt eine Vernadelung von 50 bis 130 Cps/Minute ist.

4. Drapierverfahren nach Anspruch 1, 2 oder 3, **dadurch gekennzeichnet, dass** es vor dem Aufbringen einen Schritt der Wasserstrahlverfestigung des Vliesstoffs oder der Vliesstoffe umfasst.

5. Drapierverfahren nach Anspruch 4, **dadurch gekennzeichnet, dass** der vorbereitende Schritt der Wasserstrahlverfestigung bei einem Druck im Bereich von 40 bis 80 bar durchgeführt wird.

6. Drapierverfahren nach einem der vorhergehenden Ansprüche, **dadurch gekennzeichnet, dass** es vor dem Aufbringen einen Schritt des Kalandrierens des Vliesstoffs oder der Vliesstoffe umfasst.

7. Drapierverfahren nach Anspruch 1, **dadurch gekennzeichnet, dass** es vor dem Aufbringen Schritte der Vernadelung, der Wasserstrahlverfestigung und des Kalandrierens umfasst, wobei die Reihenfolge der Schritte ist: Vernadelung, dann Wasserstrahlverfestigung und dann Kalandrieren.

8. Drapierverfahren nach einem der vorhergehenden Ansprüche, **dadurch gekennzeichnet, dass** der Vliesstoff oder die Vliesstoffe Polymerfasern zweier unterschiedlicher Typen umfassen.

9. Drapierverfahren nach einem der vorhergehenden Ansprüche, **dadurch gekennzeichnet, dass** der Spannschritt ein Spannen umfasst, gewählt aus einem mechanischen Spannen mittels geschraubter oder geklemmter Zwischenlagen, einem elektromagnetischen Spannen mittels Magnet, einem Spannen mittels Klebebändern oder einem Spannen mittels Befestigungsbändern.

## Claims

1. A method for draping on a form (1) a thermoplastic composite material, the method comprising a step of laying up on the form a first ply support in the form of one or more nonwoven fabrics (2, 2a; 2b, 2c) made of polymer fibers of a material compatible with the matrix of the composite material to be draped, a step of positioning the one or more nonwoven fabrics by stretching the one or more nonwoven fabrics on the form and a step of clamping the one or more nonwoven fabrics stretched on the form, one or more steps of draping plies (4,5) of thermoplastic material and, in the step of coupling the first ply, a step of melting of the material of the one or more nonwoven fabrics and/or a step of introducing resin by partial melting of the polymer fibers of the one or more nonwoven fabrics.

2. The draping method according to claim 1, wherein it comprises a step of needle-punching the one or more nonwoven fabrics prior to the lay-up.

3. The draping method according to claim 2, wherein the needle-punching step is a needle-punching of 50 to 130 strokes/minute.

4. The draping method according to claim 1, 2 or 3, wherein it comprises a step of hydroentangling the one or more nonwoven fabrics prior to the lay-up.

5. The draping method according to claim 4, wherein the prior hydroentangling step is carried out at a pressure of the order of 40 to 80 bar.

6. The draping method according to any one of preceding claims, wherein it comprises a step of calendering the one or more nonwoven fabrics prior to the lay-up.

7. The draping method according to claim 1, wherein it comprises needle-punching, hydroentangling and calendering steps prior to the lay-up, the order of the steps being needle-punching then hydroentangling then calendering.

8. The draping method according to any one of preceding claims, wherein the one or more nonwoven fabrics comprise polymer fibers of two different natures.

9. The draping method according to any one of preceding claims, wherein the step of clamping comprises a clamping selected from a mechanical clamping using screwed or clamped blocks, an electromagnetic clamping with the aid of a magnet, a clamping by means of adhesive tapes or a clamping by coupling strips.
